# EUROPEAN PATENT APPLICATION

(11) **EP 3 605 759 A1**
(43) Date of publication of application: **05.02.2020**
(21) Application number: 17901964.1
(22) Date of filing: 21.03.2017
(51) Int. Cl.: H02G 3/04

(54) **CORE, MOLDING DEVICE, AND MOLDING METHOD**

(71) Applicant: Yazaki Corporation, Minato-ku Tokyo 108-8333 (JP)
(72) Inventor: MACHIDA Yusuke, Makinohara-shi Shizuoka 421-0407 (JP); SUZUKI Yoshiaki, Makinohara-shi Shizuoka 421-0407 (JP)
(74) Representative: Grünecker Patent- und Rechtsanwälte PartG mbB
(86) International application number: PCT/JP2017/011270
(87) International publication number: WO 2018/173128

(57) **Abstract**

A core (25) which is clamped together with an electric wire protection tube (17) in a molding die (27) when molding a molded portion, in a molding device (23) for clamping a part of the electric wire protection tube (17) which is hollow cylindrical shaped with the molding die (27) and molding the molded portion on an outer peripheral side of the electric wire protection tube (17), with respect to the electric wire protection tube (17) which is formed with a slit (15) in a longitudinal direction, the core (25) including a core main body portion (63) which has a rod shape and is accommodated in the electric wire protection tube (17); and a protruding piece portion (65) which is projected on a portion of an outer peripheral surface of the core main body portion (63), the portion being to be clamped by the molding die, and protruding from the slit (15) of the electric wire protection tube (17).

## Description

### Technical Field

The present invention relates to a core, a molding device and a molding method for manufacturing an electric wire protection member with a molded portion.

### Background Art

In an automobile or the like, a wire harness for transmitting electric power from a battery or the like and a control signal from a control device to various electronic equipment mounted is wired. Some of such wire harnesses are provided with various exterior members such as a straight tube, a corrugated tube, and a protector in order to accommodate and protect an electric wire (see Patent Literature 1).

### Citation List

### Patent Literature

Patent Literature 1: JP 2012-217295 A

### Summary of Invention

### Technical Problem

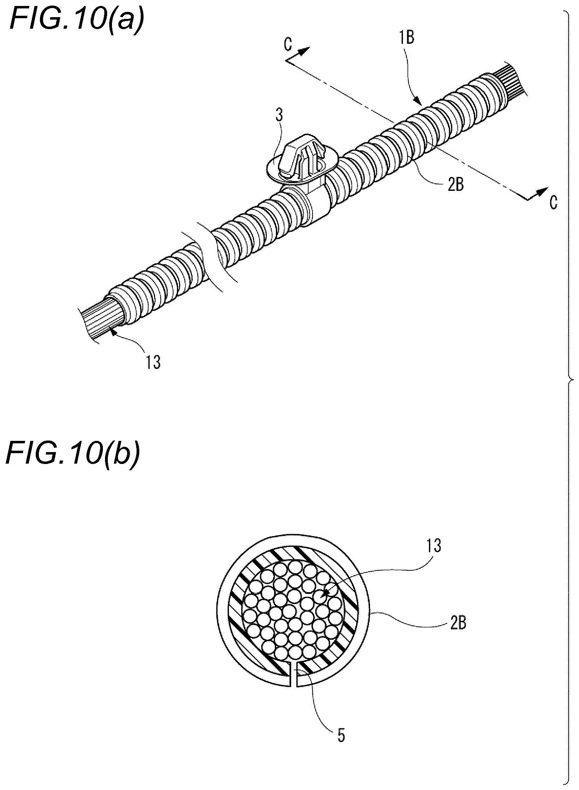

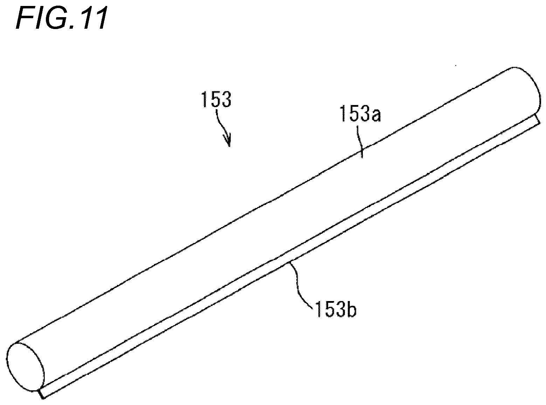

First, with reference to Figs. 10(a) to 11, a manufacturing method for a conventional exterior member disclosed in Patent Literature 1 will be described. Fig. 10(a) is a perspective view showing a conventional exterior member, and Fig. 10(b) is a sectional view taken along a line C-C of Fig. 10(a). Fig. 11 is a perspective view showing a core used in a conventional manufacturing device.

As shown in Fig. 10(a), an electric wire protection member 1B with a molded portion is an exterior member for an electric wire which accommodates and protects an electric wire bundle 13 in which a plurality of electric wires are bundled in a bundle shape. A wire harness includes the electric wire protection member 1B with a molded portion and the electric wire bundle 13. As shown in Figs. 10(a) and 10(b), the electric wire protection member 1B with a molded portion includes a hollow cylindrical electric wire protection tube 2B formed with a slit 5 in a longitudinal direction thereof, and a molded portion 3 molded on an outer peripheral side of an intermediate portion in the longitudinal direction of the electric wire protection tube 2B. As shown in Fig. 10(b), the slit 5 is formed to have a predetermined width.

The electric wire protection tube 2B is a so-called corrugated tube in which a convex portion and a concave portion are alternately repeatedly provided on an outer peripheral surface thereof in the longitudinal direction. The electric wire bundle 13 is inserted into the electric wire protection tube 2B from an opening at one end side in the longitudinal direction thereof and the slit 5.

The molded portion 3 is integrally formed with the electric wire protection tube 2B so as to be firmly fixed to the outer peripheral surface of the electric wire protection tube 2B by molding. The molded portion 3 has a clamp shape, and is locked to an attachment portion (not shown) on a vehicle body side provided at a wiring position in which the wire harness including the electric wire protection member 1B with a molded portion is wired. That is, the molded portion 3 is used for fixing to the vehicle body. In addition, the molded portion 3 has a slit (not shown) continuous with the slit 5 of the electric wire protection tube 2B.

In the conventional technique described in Patent Literature 1, as shown in Fig. 13 or the like in Patent Literature 1, the electric wire protection member 1B with a molded portion is manufactured by clamping the intermediate portion of the electric wire protection tube 2B with a molding die and molding the molded portion 3 on the outer peripheral surface of the electric wire protection tube 2B. In the manufacturing process, a core 153 shown in Fig. 11 is used.

The core 153 is a member which is accommodated inside the electric wire protection tube 2B and is clamped together with the electric wire protection tube 2B in the molding die so that the hollow electric wire protection tube 2B is not crushed and deformed due to injection pressure of a molten resin at the time of molding. As shown in Fig. 11, the core 153 includes a core main body portion 153a formed in a columnar shape, and a protruding strip 153b protruded on an outer peripheral surface of the core main body portion 153a and extended in an axial direction of the core main body portion 153a. The core main body portion 153a is formed to have a diameter slightly smaller than an inner diameter of a concave portion of the electric wire protection tube 2B. The protruding strip 153b is formed over the entire length of the core main body portion 153a, and is formed such that a protrusion amount is larger than a thickness of summing the electric wire protection tube 2B externally fitted to the core main body portion 153a and the molded portion 3 formed on the outer peripheral surface of the electric wire protection tube 2B.

The molding is performed in a state in which the protruding strip 153b protrudes from the slit 5 of the electric wire protection tube 2B, so that the slit 5 of the electric wire protection tube 2B has a shape having a predetermined width, and a molded portion 3 having a slit (not shown) is formed.

According to the protruding strip 153b, the protruding strip 153b is clamped so as to protrude from the slit 5 of the electric wire protection tube 2B, so that an orientation of the electric wire protection tube 2B can be easily set to a regular orientation. That is, the core 153 has a function of regulating the orientation of the electric wire protection tube 2B.

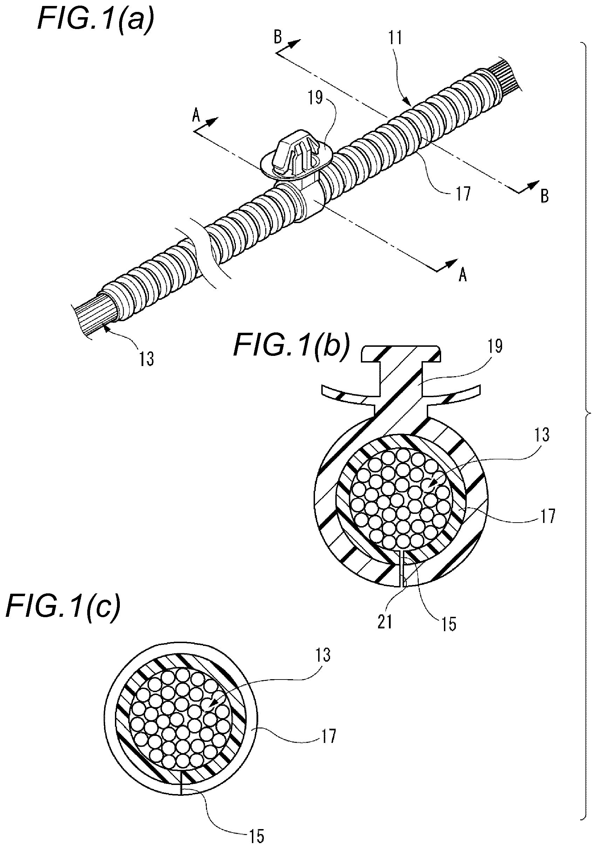

More specifically, a process in which the slit 5 has a shape having the predetermined width will be described. The electric wire protection tube 2B is formed in a shape in which the slit 5 does not have a width before molding. That is, the electric wire protection tube 2B is formed in a shape in which two surfaces facing each other in the slit 5 are close to each other to an extent that they are substantially in contact with each other. For example, the electric wire protection tube is formed in a shape of the electric wire protection tube 17 shown in Fig. 1(c) described later. On the other hand, as described above, the molding is performed in the state in which the protruding strip 153b protrudes from the slit 5 of the electric wire protection tube 2B, so that the slit 5 is deformed by heat at the time of molding, and as shown in Fig. 10(b), the slit 5 has the shape having the predetermined width.

In this manner, as shown in Fig. 10(b), in the electric wire protection member 1B with a molded portion obtained by a conventional manufacturing method, since the slit 5 is opened by a width of the protruding strip 153b, a gap is formed in the slit 5. In a case where the gap is formed in this manner, since a rigidity of the electric wire protection tube 2B is high in a portion where the molded portion 3 extends, the slit 5 is unlikely to be opened. However, since the rigidity of the electric wire protection tube 2B in a portion away from the molded portion 3 is smaller than that in the portion where the molded portion 3 extends, the slit 5 is easy to open, so that there is a possibility that an electric wire of the electric wire bundle 13 protrudes from the portion away from the molded portion 3 in a wiring process or the like of the wire harness.

The present invention has been made in view of the above-described circumstances, and an object thereof is to provide a core, a molding device and a molding method for manufacturing an electric wire protection member with a molded portion which can suppress protrusion of an electric wire.

### Solution to Problem

The purpose according to the present invention is achieved by the following configurations.
(1) a core which is clamped together with an electric wire protection tube in a molding die when molding a molded portion, in a molding device for manufacturing an electric wire protection member with the molded portion by clamping a part of the electric wire protection tube which is hollow cylindrical shaped with the molding die and molding the molded portion on an outer peripheral side of the electric wire protection tube, with respect to the electric wire protection tube which is formed with a slit in a longitudinal direction, the core including: a core main body portion which has a rod shape and is accommodated in the electric wire protection tube; and a protruding piece portion which is projected on a portion of an outer peripheral surface of the core main body portion, the portion being to be clamped by the molding die, and protruding from the slit of the electric wire protection tube.
   According to the core having the above configuration (1), the protruding piece portion protruding radially outward from the outer peripheral surface of the core main body portion is arranged inside the clamped molding die, and is not arranged on the outer peripheral surface of the core main body portion arranged outside the molding die. Therefore, an attachment workability of the electric wire protection tube to the core is improved (if the protruding piece portion is provided on the entire length (end portion) of the outer peripheral surface of the core, it is necessary to simultaneously perform both close contact and slit alignment of the electric wire protection tube to the core, which is a difficult task. Therefore, there is a concern about problems such as damage to the end portion of the protection tube and opening of the slit). In the present invention, the electric wire protection tube may be first attached to the core, and then the slit may be aligned, so that the above problem can be solved. In addition, in the electric wire protection tube, the slit is opened by the protruding piece portion inside the molding die, but the slit remains closed at most of the outside of the molding die. Therefore, the core having the above configuration can minimize a gap caused in the slit of the electric wire protection tube after molding the molded portion while regulating an orientation of the electric wire protection tube at the time of molding by the protruding piece portion arranged inside the molding die.
(2) a molding device of an electric wire protection member with a molded portion including: the molding die and the core according to the above configuration (1); and an injection device configured to inject a molten resin into the molding die.
   According to the molding device having the above configuration (2), the slit of the electric wire protection tube is opened by the protruding piece portion of the core inside the molding die, but the molded portion is molded while the slit of the electric wire protection tube remains closed at most of the outside of the molding die. Therefore, the molding device having the above configuration enables molding of the electric wire protection member with a molded portion in a state in which most of the slit of the electric wire protection tube is closed even after the molding portion is molded.
(3) a molding method for manufacturing an electric wire protection member with a molded portion by clamping a part of an electric wire protection tube which is hollow cylindrical shaped with a molding die and molding the molded portion on an outer peripheral side of the electric wire protection tube, with respect to the electric wire protection tube which is formed with a slit in a longitudinal direction, the method including: a clamping step in which a core including a rod-shaped core main body portion accommodated in the electric wire protection tube and a protruding piece portion projected on a portion of an outer peripheral surface of the core main body portion, the portion being to be clamped by the molding die, and protruding from the slit of the electric wire protection tube is clamped together with the electric wire protection tube in the molding die; and a molding step in which the molded portion is molded on the outer peripheral side of the electric wire protection tube.

According to the molding method having the above configuration (3), in the die clamping step, the protruding piece portion of the core which is clamped together with the electric wire protection tube in the molding die protrudes from the slit of the electric wire protection tube, so that the orientation of the electric wire protection tube at the time of molding is regulated. In the molding step, when the molten resin is filled in the molded portion cavity of the molding die, the molded portion is molded in a part of the electric wire protection tube in the longitudinal direction. At this time, the slit of the electric wire protection tube is opened by the protruding piece portion of the core inside the molding die, but the slit remains closed at most of the outside of the molding die. Therefore, according to the molding method having the above configuration, it is possible to mold the electric wire protection member with a molded portion in the state in which most of the slit of the electric wire protection tube is closed even after the molding portion is molded. As a result, the electric wire protection member with a molded portion in which protrusion of an electric wire is suppressed can be manufactured.

### Advantageous Effects of Invention

According to the present invention, it is possible to provide a core, a molding device and a molding method for manufacturing an electric wire protection member with a molded portion which can suppress the protrusion of the electric wire.

The present invention has been briefly described above. Further, the details of the present invention will be further clarified by reading a mode (hereinafter, referred to as an "embodiment") for carrying out the invention described below with reference to the accompanying drawings.

### Brief Description of Drawings

Fig. 1(a) is a perspective view of an electric wire protection member with a molded portion manufactured by a molding device according to an embodiment of the present invention, Fig. 1(b) is a sectional view taken along a line A-A of Fig. 1(a), and Fig. 1(c) is a sectional view taken along a line B-B of Fig. 1(a).
Fig. 2 is a perspective view of the molding device of the electric wire protection member with a molded portion according to the present embodiment as viewed from a front side.
Fig. 3 is a perspective view of the molding device shown in Fig. 2 as viewed from a rear side.
Fig. 4 is a perspective view of a core shown in Fig. 2.
Fig. 5 is an exploded perspective view of a molding die shown in Fig. 2.
Fig. 6(a) is an operation explanatory view of an initial state of the molding device shown in Fig. 2, and Fig. 6(b) is an operation explanatory view at the time of setting an electric wire protection tube.
Fig. 7(a) is an operation explanatory view when a lower die of the molding device shown in Fig. 6(b) is retracted, and Fig. 7(b) is an operation explanatory view when an upper die is lowered.
Fig. 8(a) is an operation explanatory view when the upper die of the molding device shown in Fig. 7(b) is lifted, and Fig. 8(b) is an operation explanatory view when the lower die is advanced.
Fig. 9(a) is an operation explanatory view of an ejector device in a standby state, and Fig. 9(b) is an operation explanatory view of an operation state of the ejector device.
Fig. 10(a) is a perspective view showing a conventional exterior member, and Fig. 10(b) is a sectional view taken along a line C-C of Fig. 10(a).
Fig. 11 is a perspective view showing a core used in a conventional manufacturing device.

### Description of Embodiments

Hereinafter, an embodiment of the present invention will be described below with reference to the drawings.

A molding device according to the embodiment of the present invention can be suitably used for manufacturing an electric wire protection member 11 with a molded portion shown in Fig. 1(a). The electric wire protection member 11 with a molded portion is an exterior member for an electric wire which accommodates and protects an electric wire bundle 13 in which a plurality of electric wires are bundled in a bundle shape. A wire harness includes the electric wire protection member 11 with a molded portion and the electric wire bundle 13. As shown in Figs. 1(b) and 1(c), the electric wire protection member 11 with a molded portion includes a hollow cylindrical electric wire protection tube 17 formed with a slit 15 in a longitudinal direction thereof, and a molded portion 19 molded on an outer peripheral side of an intermediate portion in the longitudinal direction of the electric wire protection tube 17. Unlike the electric wire protection tube 2B (see Fig. 10(b)) of the conventional electric wire protection member 1B with a molded portion described above, the electric wire protection tube 17 is formed such that the slit 15 does not have a width. That is, the electric wire protection tube 17 has a shape in which two surfaces facing each other in the slit 15 are close to each other to an extent that they are substantially in contact with each other.

The electric wire protection tube 17 is a so-called corrugated tube in which a convex portion and a concave portion are alternately repeatedly provided on an outer peripheral surface thereof in the longitudinal direction. The electric wire bundle 13 is inserted into the electric wire protection tube 17 from an opening at one end side thereof in the longitudinal direction and the slit 15. Further, the electric wire protection tube 17 accommodates the electric wire bundle 13 therein. The electric wire protection tube 17 is made of, for example, a synthetic resin such as polypropylene, is formed in a cylindrical shape, and has a flexibility.

The molded portion 19 is made of, for example, a synthetic resin such as polypropylene, and is integrally formed with the electric wire protection tube 17 so as to be fixed to the outer peripheral surface of the electric wire protection tube 17 by molding. In the present embodiment, the molded portion 19 has a clamp shape, and is locked to an attachment portion (not shown) on a vehicle body side provided at a wiring position in which the wire harness including the electric wire protection member 11 with a molded portion is wired. That is, the molded portion 19 is used for fixing the wire harness to a vehicle body. In addition, as shown in Fig. 1(b), the molded portion 19 has a slit 21 which is cut radially so as to be in line with the slit 15 of the electric wire protection tube 17.

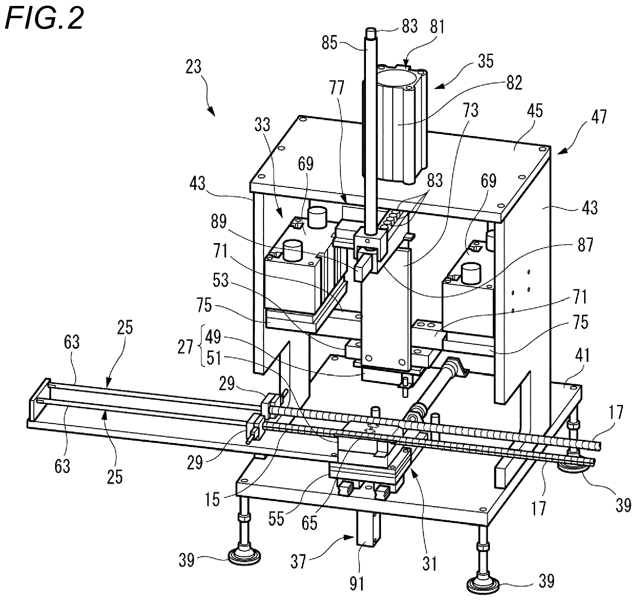

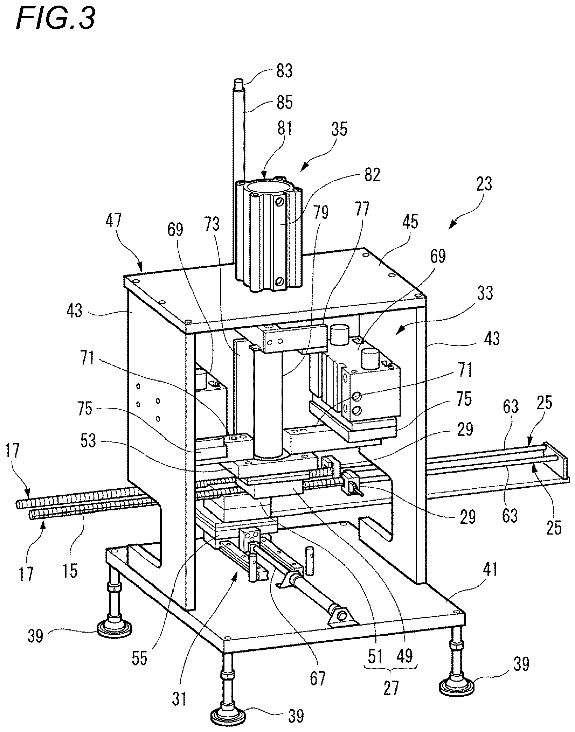

The electric wire protection member 11 with a molded portion described above is manufactured by molding the molded portion 19 on the outer peripheral surface of the electric wire protection tube 17 by using a molding device 23 according to the present embodiment shown in Figs. 2 and 3. The molding device 23 includes a molding die 27, a core 25, positioning devices 29, a lower die moving device 31, an upper die opening/closing device 33, an injection device 35, and an ejector device 37. A near side of Fig. 2 is a front side of the molding device 23, and a back side of Fig. 2 is a rear side of the molding device 23. An operator stands on the front side of the molding device 23, and performs an operation such as attachment of the electric wire protection tube 17 to the molding die 27 and removal of the electric wire protection member 11 with a molded portion from the molding die 27.

In the molding device 23, a surface plate 41 is supported by a plurality of leg portions 39. On the surface plate 41, a frame 47 is configured by a pair of side plate portions 43 and a top plate portion 45.

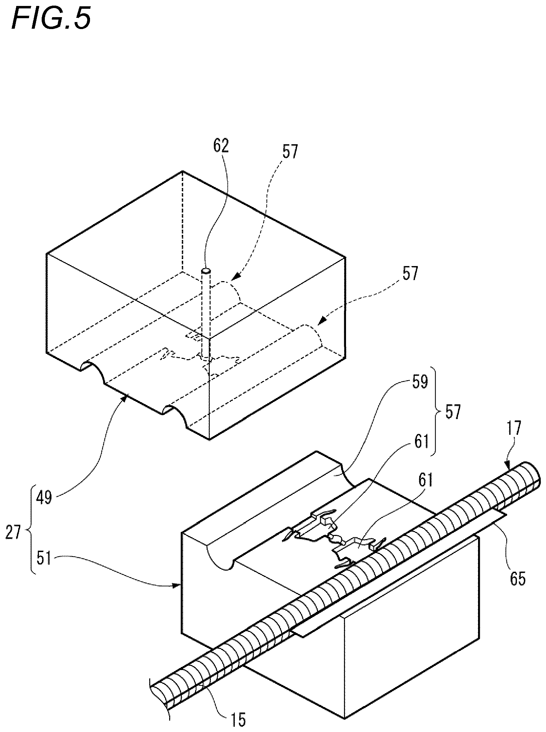

As shown in Figs. 2 and 5, the molding die 27 includes a pair of upper die 49 and lower die 51. The upper die 49 is fixed to an upper pedestal 53 which is possible to be moved up and down in an upper-lower direction (upper-lower direction in Fig. 2). The lower die 51 is supported by a lower pedestal 55 which is movable in a front-rear direction.

In the molding die 27, the pair of upper die 49 and lower die 51 clamp the intermediate portion of the electric wire protection tube 17 in the longitudinal direction, and defines a cavity 57 shown in Fig. 5 for molding the molded portion 19 between the electric wire protection tube 17 and it. In the present embodiment, the molding die 27 has a pair of cavities 57 capable of simultaneously molding the molded portions 19 on the two electric wire protection tubes 17 respectively. Each of the pair of cavities 57 includes a protection tube cavity 59 and a molded portion cavity 61. The molded portion cavities 61 of the pair of cavities 57 are connected to a supply passage 62 formed in the upper die 49 via a gate.

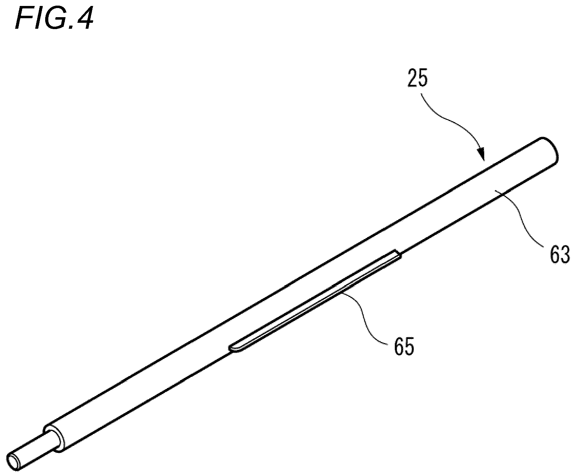

The pair of cores 25 are clamped together with the electric wire protection tubes 17 in the molding die 27 at the time of molding. As shown in Fig. 4, the core 25 includes a cylindrical (rod-like) core main body portion 63 accommodated in the electric wire protection tube 17, and a protruding piece portion 65 projected on an outer peripheral surface of the core main body portion 63, and protruding from the slit 15 of the electric wire protection tube 17 so as to regulate an orientation of the electric wire protection tube 17.

The protruding piece portion 65 is projected on a portion of the outer peripheral surface of the core main body portion 63, in which the portion is to be clamped by the molding die 27, and is not projected outside the portion which is to be clamped by the molding die 27. Therefore, the slit 15 of the electric wire protection tube 17 is not opened by the protruding piece portion 65 over the entire length at the time of molding. As a result, the core 25 according to the present embodiment can minimize a gap caused in the slit 15 of the electric wire protection tube 17 after molding the molded portion 19 while regulating the orientation of the electric wire protection tube 17 at the time of molding by the protruding piece portion 65 arranged inside the molding die 27. Incidentally, the arrangement of the protruding piece portion 65 is not strictly limited to the inside of the molding die 27, and the protruding piece portion 65 is allowed to slightly be protruded from the molding die 27.

Each of the positioning devices 29 positions a molding position of the molded portion 19 in the electric wire protection tube 17 so as to coincide with a position of the molded portion cavity 61 of the upper die 49 and the lower die 51, by abutting against an insertion tip end portion of the electric wire protection tube 17 inserted into the core 25. Each of the positioning devices 29 can be fixed to a desired position in a longitudinal direction of the core 25.

The lower die moving device 31 is fixed to the surface plate 41. A driving shaft 67 of the lower die moving device 31 is connected to the lower pedestal 55. The core 25 and the lower die 51 driven by the lower die moving device 31 move between a die clamping position (a position on the rear side), at which together with the electric wire protection tube 17, the core 25 is clamped by the upper die 49, and an insertion/removal position (a position on the front side) at which the electric wire protection tube 17 can be inserted into and drawn from the core 25.

The upper die opening/closing device 33 includes a pair of raising/lowering actuators 69, raising/lowering levers 71, and a raising/lowering front plate 73. The pair of raising/lowering actuators 69 are fixed to the pair of side plate portions 43, respectively. The raising/lowering levers 71 are fixed to driving plates 75 of the raising/lowering actuators 69, respectively. The pair of raising/lowering levers 71 are fixed to the upper pedestal 53 described above. That is, the upper pedestal 53 is configured to be raised/lowered through the raising/lowering levers 71 by the driving of the pair of raising/lowering actuators 69. Accordingly, the upper die opening/closing device 33 opens/closes the upper die 49 with respect to the lower die 51 at the die clamping position. The raising/lowering front plate 73 is fixed to the upper pedestal 53 and extends upward.

The injection device 35 injects a molten resin into the cavities 57 via the supply passage 62 of the molding die 27. The injection device 35 includes a molding material supply device 77, a heating device 79, and a molding material pushing device 81.

The molding material supply device 77 is fixed to an upper portion of the raising/lowering front plate 73. The molding material supply device 77 is connected to a supply pipe 85 to which pellets (columnar solid molding material) 83 are supplied. The pellets 83 are made of, for example, the above-described synthetic resin such as polypropylene. The pellets 83 supplied from the supply pipe 85 are aligned side by side in the front-rear direction in a magazine portion 87 of the molding material supply device 77 with axis lines being in upper-lower postures. The magazine portion 87 is formed with pellet accommodation grooves in the front-rear direction in which the pellets 83 are aligned. The pellets 83 supplied to the pellet accommodation grooves are sequentially sent to the rear side by a slide rod 89. The pellet 83 sent to the rearmost portion of the pellet accommodation grooves is pushed into the heating device 79 by the molding material pushing device 81.

The heating device 79 is fixed to a rear surface of the raising/lowering front plate 73. The heating device 79 communicates with the supply passage 62 of the upper die 49. The heating device 79 is provided with a heater (not shown) which melts from a lower stage side of the pellets 83 fed by the molding material supply device 77. The heating device 79 is formed in a cylinder shape, and a pellet accommodation chamber (not shown) having an inner diameter substantially equal to an outer diameter of the pellet 83 extends in the upper-lower direction. Further, the plurality of pellets 83 are continuously accommodated in the pellet accommodation chamber in the upper-lower direction. A lower portion of the pellet accommodation chamber communicates with the molded portion cavities 61. On the other hand, an upper portion of the pellet accommodation chamber is open to the magazine portion 87. That is, the pellets 83 on the upper portion of the pellet accommodation chamber are solid, and the pellets 83 on the lower portion of the pellet accommodation chamber is the molten resin. The molten resin is pressurized and injected (low pressure injection) into the molded portion cavities 61 by pressure of the pellets 83 pushed into the pellet accommodation chamber.
Incidentally, the low pressure injection means that an amount of resin which can be molded by one injection molding is about several tens of g at the maximum, and a die clamping force of the molding die 27 is relatively small.

The molding material pushing device 81 includes an air cylinder 82 having a pushing shaft (not shown) which pushes the pellets 83 toward the molded portion cavities 61 in the heating device 79. The air cylinder 82 is fixed to the top plate portion 45, and the pellets 83 are pushed into the heating device 79 from the pellet accommodation chamber of the magazine portion 87 by the pushing shaft of the air cylinder 82.

The ejector device 37 ejects molded products in the cavities 57 of the lower die 51 positioned at the insertion/removal position. The ejector device 37 includes an actuator for an ejector 91 fixed to a lower surface of the surface plate 41. An actuator shaft 93 of the actuator for the ejector 91 causes an upper end of an ejector pin (not shown) penetrating the lower die 51 to project upward from the cavities 57.

Next, a molding method for manufacturing the electric wire protection member 11 with a molded portion using the molding device 23 according to the present embodiment described above will be described. In the following description, a mode in which an operator performs each operation will be described, but each operation may be performed by either of an operator or a mechanical device.

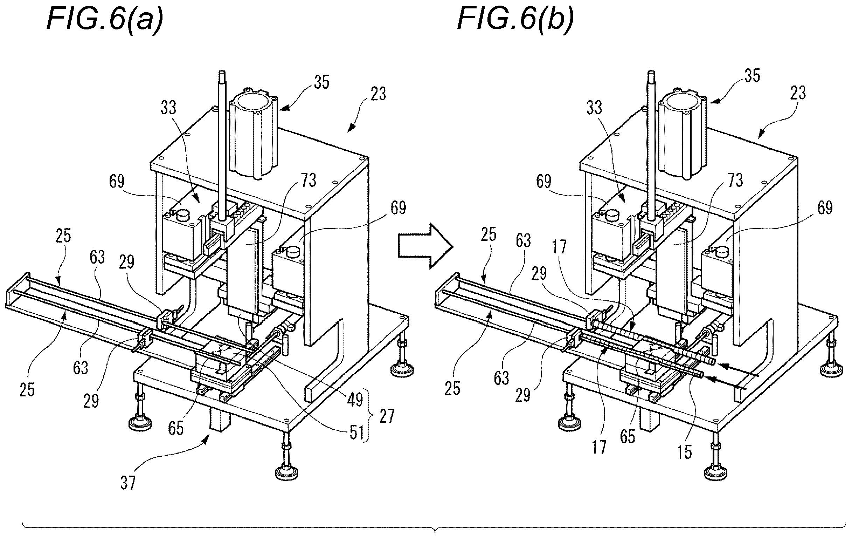

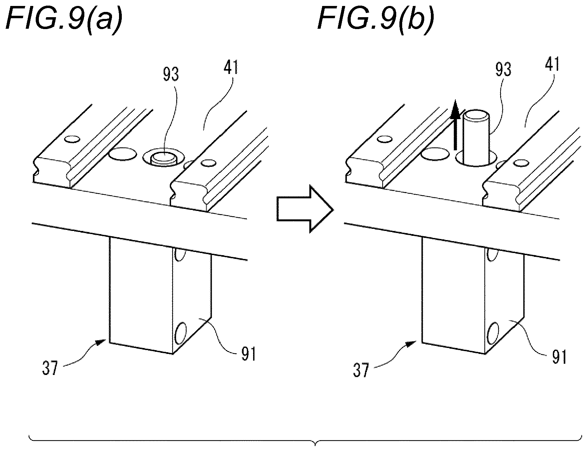

In the molding device 23, in an initial state shown in Fig. 6(a), the lower die 51 is moved to the insertion/removal position on the front side. As shown in Fig. 9(a), the actuator shaft 93 of the actuator for the ejector 91 is retracted to a retracted position of the surface plate 41. The positioning device 29 is fixed to each of the pair of cores 25 at a predetermined position in the longitudinal direction.

First, as shown in Fig. 6(b), in a state in which the cores 25 are positioned above the lower die 51, the operator inserts each of the electric wire protection tubes 17 from the end portions of the core 25 opposite to the positioning device 29 until the insertion tip end abuts against the positioning device 29. At this time, since the protruding piece portion 65 is provided in the core 25, as shown in Fig. 5, the protruding piece portion 65 is inserted into the slit 15 of each of the electric wire protection tubes 17. The electric wire protection tube 17 is inserted into the core 25 while the orientation of the electric wire protection tube 17 is regulated by the protruding piece portion 65.

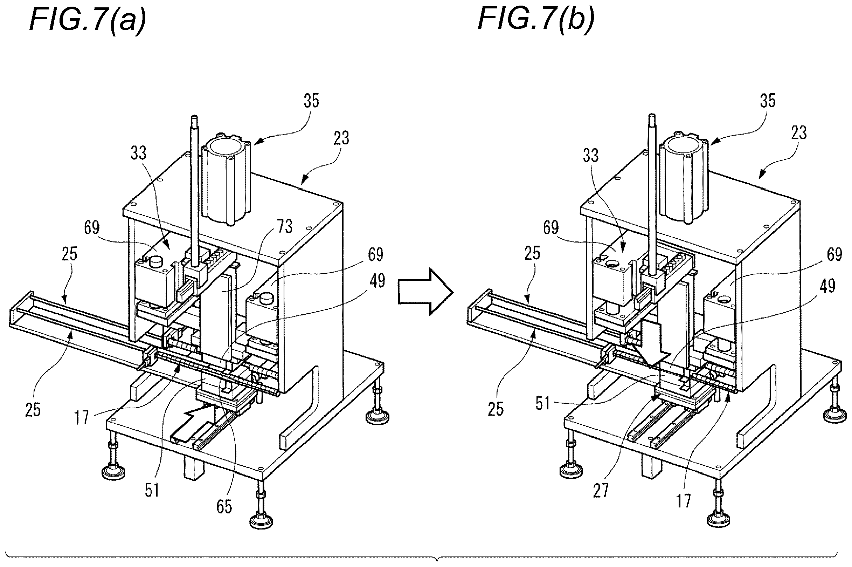

Thereafter, as shown in Fig. 7(a), the lower die 51 is moved to the die clamping position on the rear side of the molding device 23 by the operation of the operator (or automatic). Next, as shown in Fig. 7(b), after the lower die 51 and the core 25 are positioned at the die clamping position of the molding die 27, the upper die 49 is lowered by the upper die opening/closing device 33. By lowering the upper die 49, the molding die 27 is closed and clamped (die clamping step).

Thereafter, the molten resin is injected from the injection device 35 into the molding die 27, and filled into the cavities 57 defined in the molding die 27 (molding step).

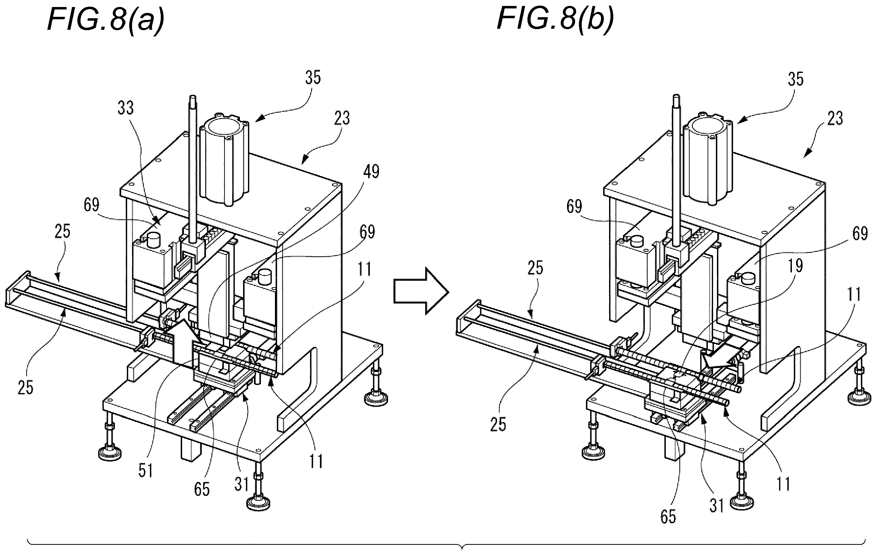

Next, as shown in Fig. 8(a), after the resin filled in the cavities 57 is cured, the upper die 49 is moved upward by the upper die opening/closing device 33 by the operation of the operator (or automatic), and the molding die 27 is opened. At this time, the molded portion 19 is formed on the outer peripheral surface of the electric wire protection tube 17. At the time of molding, the molten resin which has flowed into each of the cavities 57 is prevented from flowing into the slit 15 of the electric wire protection tube 17 by the protruding piece portion 65. That is, the slit 15 is left as it is. In addition, the slit 21 is similarly formed in the molded portion 19.

As shown in Fig. 8(b), by the operation of the operator (or automatic), the lower die 51 and the core 25 are moved to the insertion/removal position on the front side of the molding device 23 by the lower die moving device 31. As shown in Fig. 9(b), in the lower mold 51 moved toward the front side, the molded product in the cavity 57 is pushed up by the ejector pin of the ejector device 37 protruding from the surface plate 41. Accordingly, in the electric wire protection member 11 with a molded portion, the molded portion 19 is lifted off and separated from the molded portion cavity 61 of the lower die 51. When the molded portion 19 is separated from the lower die 51, the electric wire protection member 11 with a molded portion is easily taken out in a direction opposite to an insertion direction from the core 25.

Next, operations of the core 25, the molding device 23 and the molding method according to the present embodiment will be described.

In the core 25 according to the present embodiment, the protruding piece portion 65 protruding radially outward from the outer peripheral surface of the core main body portion 63 is arranged at least inside the clamped molding die 27. The phrase "arranged at least inside" means that the arrangement of the protruding piece portion 65 is not strictly limited to the inside of the molding die 27, and the protruding piece portion 65 is allowed to slightly be protruded from the molding die 27. In other words, the protruding piece portion 65 is not arranged on most of the outer peripheral surface of the core main body portion 63 arranged outside the molding die 27. Therefore, an attachment workability of the electric wire protection tube 17 to the core 25 is improved (if the protruding piece portion 65 is provided on the entire length (end portion) of the outer peripheral surface of the core 25, it is necessary to simultaneously perform both close contact and slit alignment of the electric wire protection tube 17 to the core 25, which is a difficult task. Therefore, there is a concern about problems such as damage to the end portion of the protection tube and opening of the slit 15). In the present embodiment, the electric wire protection tube 17 may be first attached to the core 25, and then the slit 15 may be aligned, so that the above problem can be solved. In addition, the electric wire protection tube 17 is sandwiched by the molding die 27, and the core 25 is inserted thereinto. In the electric wire protection tube 17, the slit 15 is opened by the protruding piece portion 65 inside the molding die 27, but the slit 15 remains closed at most of the outside of the molding die 27. Therefore, the core 25 can minimize the gap caused in the slit 15 of the electric wire protection tube 17 after molding the molded portion 19 while regulating the orientation of the electric wire protection tube 17 at the time of molding by the protruding piece portion 65 arranged inside the molding die 27. As a result, as shown in Figs. 1(a) to 1(c), the electric wire protection member 11 with a molded portion in which the protrusion of the electric wire is suppressed can be manufactured.

Further, according to the molding device 23 of the present embodiment, the slit 15 of the electric wire protection tube 17 is opened by the protruding piece portion 65 of the core 25 inside the molding die 27, but the molded portion 19 is molded while the slit 15 of the electric wire protection tube 17 remains closed at most of the outside of the molding die 27.

Therefore, the molding device 23 enables the molding of the electric wire protection member 11 with a molded portion in a state in which most of the slit 15 of the electric wire protection tube 17 is closed even after the molded portion 19 is molded. As a result, as shown in Figs. 1(a) to 1(c), the electric wire protection member 11 with a molded portion in which the protrusion of the electric wire is suppressed can be manufactured.

According to the molding method according to the present embodiment, in the die clamping step, the protruding piece portion 65 of the core 25 which is clamped together with the electric wire protection tube 17 in the molding die 27 protrudes from the slit 15 of the electric wire protection tube 17, so that the orientation of the electric wire protection tube 17 at the time of molding is regulated.

In the molding step, when the molten resin is filled in the molded portion cavity 61 of the molding die 27, the molded portion 19 is molded in a part of the electric wire protection tube 17 in the longitudinal direction. At this time, the slit 15 of the electric wire protection tube 17 is opened by the protruding piece portion 65 of the core 25 inside the molding die 27, but the slit 15 remains closed at most of the outside of the molding die 27.

Therefore, according to the molding method of the present embodiment, it is possible to mold the electric wire protection member 11 with a molded portion in the state in which most of the slit 15 of the electric wire protection tube 17 is closed even after the molding portion 19 is molded. As a result, as shown in Figs. 1(a) to 1(c), the electric wire protection member 11 with a molded portion in which the protrusion of the electric wire is suppressed can be manufactured.

Therefore, according to the present embodiment, it is possible to provide the core 25, the molding device 23 and the molding method for manufacturing the electric wire protection member 11 with a molded portion which can suppress the protrusion of the electric wire.

Here, aspects of the embodiments of the core, molding device and molding method according to the present invention described above will be briefly summarized below.
(1) a core (25) which is clamped together with an electric wire protection tube (17) in a molding die (27) when molding a molded portion, in a molding device (23) for manufacturing an electric wire protection member (11) with the molded portion by clamping a part of the electric wire protection tube (17) which is hollow cylindrical shaped with the molding die (27) and molding the molded portion on an outer peripheral side of the electric wire protection tube (17), with respect to the electric wire protection tube (17) which is formed with a slit (15) in a longitudinal direction, the core (25) including: a core main body portion (63) which has a rod shape and is accommodated in the electric wire protection tube (17); and a protruding piece portion (65) which is projected on a portion of an outer peripheral surface of the core main body portion (63), the portion being to be clamped by the molding die, and protruding from the slit (15) of the electric wire protection tube (17).
(2) a molding device (23) of an electric wire protection member (11) with a molded portion including: the molding die (27) and the core (25) according to the above configuration (1); and an injection device (35) configured to inject a molten resin into the molding die (27).
(3) a molding method for manufacturing an electric wire protection member (17) with a molded portion by clamping a part of an electric wire protection tube (11) which is hollow cylindrical shaped with a molding die (27) and molding the molded portion on an outer peripheral side of the electric wire protection tube (17), with respect to the electric wire protection tube (17) which is formed with a slit (15) in a longitudinal direction, the method including: a clamping step in which a core (25) including a rod-shaped core main body portion (63) accommodated in the electric wire protection tube (17) and a protruding piece portion (65) projected on a portion of an outer peripheral surface of the core main body portion (63), the portion being to be clamped by the molding die (27), and protruding from the slit of the electric wire protection tube (17) is clamped together with the electric wire protection tube (17) in the molding die (27); and a molding step in which the molded portion is molded on the outer peripheral side of the electric wire protection tube (17).

Incidentally, the present invention is not limited to the above-described embodiment and may be appropriately modified, improved, or the like. In addition, the material, shape, size, number, arrangement position, or the like of each component in the above-described embodiment are selectable and are not limited as long as the present invention can be achieved.

### Industrial Applicability

According to the molding device and the molding method of the electric wire protection member with a molded portion including the core of the present invention, the electric wire protection member with a molded portion in which the protrusion of the electric wire is suppressed can be manufactured.

### Reference Signs List

- 11: electric wire protection member with a molded portion
- 15: slit
- 17: electric wire protection tube
- 19: molded portion
- 23: molding device
- 25: core
- 27: molding die
- 35: injection device
- 63: core main body portion
- 65: protruding piece portion

## Claims

1. A core which is clamped together with an electric wire protection tube in a molding die when molding a molded portion, in a molding device for manufacturing an electric wire protection member with the molded portion by clamping a part of the electric wire protection tube which is hollow cylindrical shaped with the molding die and molding the molded portion on an outer peripheral side of the electric wire protection tube, with respect to the electric wire protection tube which is formed with a slit in a longitudinal direction, the core comprising:
a core main body portion which has a rod shape and is accommodated in the electric wire protection tube; and
a protruding piece portion which is projected on a portion of an outer peripheral surface of the core main body portion, the portion being to be clamped by the molding die, and protruding from the slit of the electric wire protection tube.

2. A molding device of an electric wire protection member with a molded portion comprising:
the molding die and the core according to claim 1; and
an injection device configured to inject a molten resin into the molding die.

3. A molding method for manufacturing an electric wire protection member with a molded portion by clamping a part of an electric wire protection tube which is hollow cylindrical shaped with a molding die and molding the molded portion on an outer peripheral side of the electric wire protection tube, with respect to the electric wire protection tube which is formed with a slit in a longitudinal direction, the method comprising:
a clamping step in which a core including a rod-shaped core main body portion accommodated in the electric wire protection tube and a protruding piece portion projected on a portion of an outer peripheral surface of the core main body portion, the portion being to be clamped by the molding die, and protruding from the slit of the electric wire protection tube is clamped together with the electric wire protection tube in the molding die; and
a molding step in which the molded portion is molded on the outer peripheral side of the electric wire protection tube.
